## Europäisches Patentamt
## European Patent Office
## Office européen des brevets

(19)

(11) Veröffentlichungsnummer: **0 051 075**
**B1**

(12) **EUROPÄISCHE PATENTSCHRIFT**

(45) Veröffentlichungstag der Patentschrift:
**29.08.84**

(51) Int. Cl.³: **H 04 N 9/535,** H 04 N 9/49

(21) Anmeldenummer: **80106654.9**

(22) Anmeldetag: **30.10.80**

(54) Farbfernsehempfänger mit mindestens einer digitalen integrierten Schaltung zur Verarbeitung des Farb-Bild-Austast-Synchronsignal-Gemisches.

(43) Veröffentlichungstag der Anmeldung:
**12.05.82 Patentblatt 82/19**

(45) Bekanntmachung des Hinweises auf die Patenterteilung:
**29.08.84 Patentblatt 84/35**

(84) Benannte Vertragsstaaten:
**DE FR GB IT NL**

(56) Entgegenhaltungen:
**FR - A - 2 444 387**

(73) Patentinhaber: **Deutsche ITT Industries GmbH, Hans-Bunte-Strasse 19 Postfach 840, D-7800 Freiburg (DE)**

(84) Benannte Vertragsstaaten: **DE**

(73) Patentinhaber: **ITT INDUSTRIES INC., 320 Park Avenue, New York, NY 10022 (US)**

(84) Benannte Vertragsstaaten: **FR GB IT NL**

(72) Erfinder: **Miskin, Leslie, Industriestrasse 2a, D-7803 Gundelfingen (DE)**
Erfinder: **Flamm, Peter, Ing.-grad., Stefan-Meier-Strasse 167, D-7800 Freiburg (DE)**

(74) Vertreter: **Stutzer, Gerhard, Dr., Deutsche ITT Industries GmbH Patent- und Lizenzabteilung Hans-Bunte-Strasse 19 Postfach 840, D-7800 Freiburg (DE)**

**Beschreibung**

Die Erfindung betrifft einen Farbfernsehempfänger mit mindestens einer digitalen integrierten Schaltung zur Verarbeitung des Farb-Bild-Austast-Synchronsignal-Gemisches, also des abgekürzt sogenannten FBAS-Signals, entsprechend dem Oberbegriff des Anspruchs 1. Derartige Farbfernsehempfänger sind in der DE-A1-2 854 236 beschrieben, und das FBAS-Signal wird darin vollständig mit Mitteln der Digitaltechnik aufbereitet. Zu diesem Zweck enthält der vorbeschriebene Farbfernsehempfänger einen Rechtecksignal-Taktgenerator für mindestens vier Taktsignale als Farbhilfsträger-Quarzoszillator, also den sogenannten FHT-Oszillator. Dabei hat das erste Taktsignal die vierfache FHT-Frequenz, während die drei restlichen Taktsignale die FHT-Frequenz haben, wobei das erste und zweite Taktsignal ein Impulsbreiten-Impulspausen-Verhältnis von 1 : 1 haben. Ferner enthält der vorbeschriebene Farbfernsehempfänger eine das digitale Chrominanzsignal liefernde Stufe und einen Parallel-Multiplizierer, dessen eines Eingangssignal das digitale Chrominanzsignal und dessen anderes Eingangssignal ein digitales Farbsättigungs-Einstellsignal ist.

In der Schaltungstechnik von mit analoger Signalaufbereitung arbeitenden Farbfernsehempfängern ist es üblich, die Amplitude der empfangenen Farbträgerschwingung, die im sogenannten Burst enthalten ist, auf einen konstanten Wert zu regeln. Ferner ist eine Stufe vorgesehen, die feststellt, ob das gesendete Signal ein nach der PAL-Norm gesendetes ist oder nicht, in welch letzterem Fall dieses Signal zur Farbabschaltung benutzt wird, vgl. zu diesen Sachverhalten das Buch von O. Limann »Fernsehtechnik ohne Ballast«, 12. Auflage, München 1978, Seiten 209 bis 211 und 220/221.

Die Erfindung, wie sie in den Ansprüchen gekennzeichnet ist, löst die Aufgabe, in einem Farbfernsehempfänger mit mindestens einer digitalen integrierten Schaltung zur Verarbeitung des FBAS-Signals die digitale Amplitudenregelung der empfangenen Farbträgerschwingung, die digitale PAL-Identifizierung und Farbunterdrückung sowie die digitale Farbsättigungseinstellung zu ermöglichen und nach der Weiterbildung des Anspruchs 2 auch eine Farbunterdrükkung bei zu stark verrauschtem Chrominanzsignal zu gewährleisten.

Der Vorteil der Erfindung ist unter anderem darin zu sehen, daß durch die rein digitale Signalverarbeitung auf nicht monolithisch integrierbare Schaltungselemente, also insbesondere auf Spulen und Kondensatoren mit nichtintegrierbarer Kapazität, weitgehend verzichtet werden kann und daß die Teilschaltungen vorzugsweise in der Technik integrierter Isolierschicht-Feldeffekttransistor-Schaltungen, also in der sogenannten MOS-Technik, realisiert werden können. Diese Technik ist nämlich zur Realisierung digitaler Schaltungen besser geeignet als die sogenannte Bipolartechnik.

Die Erfindung wird nun anhand der Figuren der Zeichnung näher erläutert.

Fig. 1 zeigt in Form eines Blockschaltbilds und als Ausführungsbeispiel den der digitalen Amplitudenregelung, der digitalen PAL-Identifizierung und Farbunterdrückung, sowie der digitalen Farbsättigungseinstellung dienenden Teil eines erfindungsgemäßen Farbfernsehempfängers, wobei der die Farbunterdrückung bei stark verrauschten Chrominanzsignalen bewerkstelligende Teil ebenfalls gezeigt ist, und

Fig. 2 zeigt den zeitlichen Verlauf der für die Erfindung charakteristischen fünf Taktsignale.

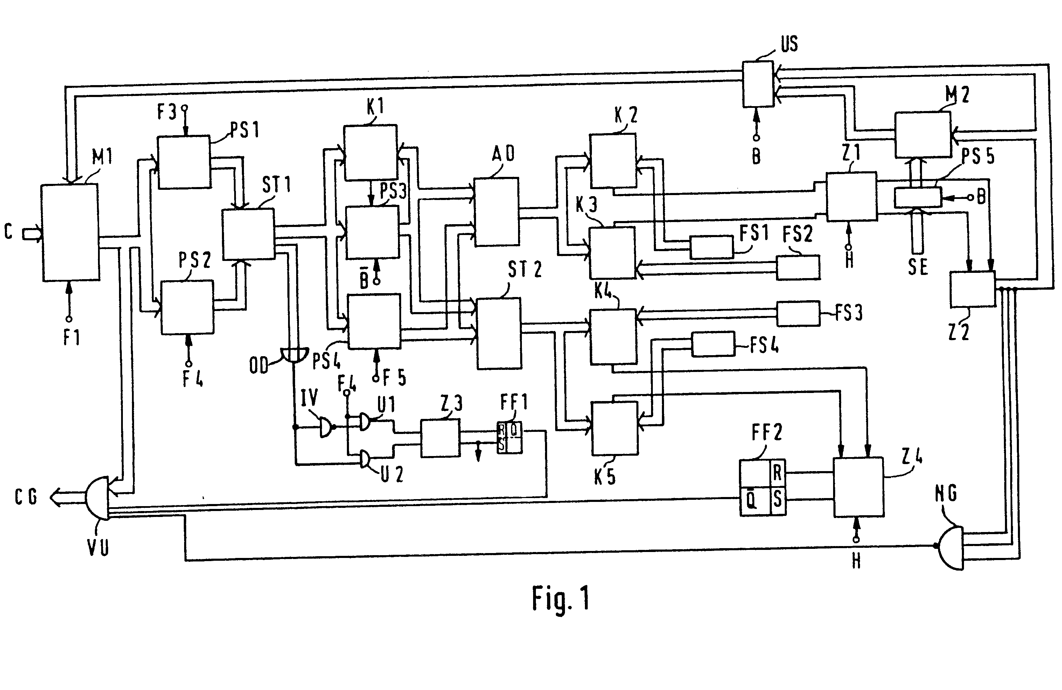

In Fig. 1 stammt das digitale Chrominanzsignal C aus einer entsprechenden Stufe, beispielsweise aus der in der eingangs genannten DE-A1-2 854 236 als dritte Binär-Rechenstufe 30 und in Fig. 4 gezeigten Stufe, die die Funktion eines digitalen Parallel-Subtrahierers hat. Das digitale Chrominanzsignal C ist dem ersten Eingang des Parallel-Multiplizierers M1 zugeführt.

In der vorliegenden Beschreibung ist bei mit dem Wortteil »Parallel-« bezeichneten Teilschaltungen unter »Eingang« immer ein Parallel-Eingang zu verstehen, an dem gleichzeitig ein vollständiges Binärwort mit entsprechender Bit-Zahl anliegt und zu einem bestimmten Zeitpunkt parallel vollständig in die Teilschaltung übernommen wird. Ebenso ist bei derartigen »Parallel«-Teilschaltungen unter »Ausgang« immer ein entsprechender Parallel-Ausgang zu verstehen, an dem sämtliche Bits des Ausgangs-Binärworts gleichzeitig vorhanden sind. In Fig. 1 sind die Verbindungsleitungen zwischen derartigen »Parallel«-Eingängen und -Ausgängen mittels bandförmigen Verbindungsleitungen veranschaulicht, während die von üblichen diskreten Schaltungen her bekannten strichartigen Verbindungsleitungen für solche Verbindungen reserviert sind, über die nur einzelne Bits oder Taktsignale etc. weitergeleitet werden.

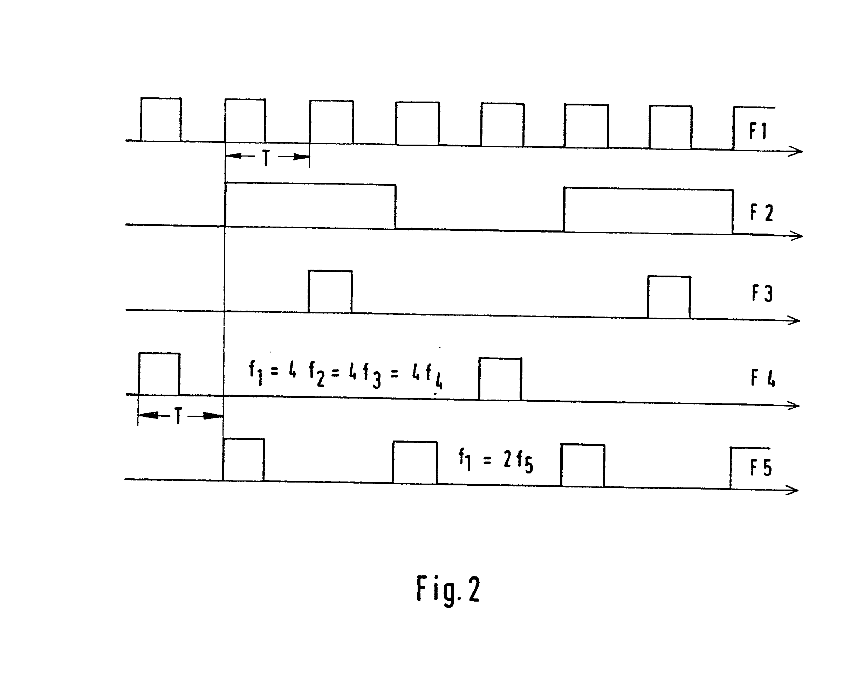

Bei der Erfindung erzeugt der FHT-Oszillator die in Fig. 2 gezeigten fünf Taktsignale, wobei das fünfte Taktsignal F5 mit der doppelten FHT-Frequenz schwingt und ein Impulsbreiten-Impulspausen-Verhältnis von 1 : 3 aufweist. Das erste Taktsignal F1 hat die vierfache FHT-Frequenz, und das zweite bis vierte Taktsignal F2, F3, F4 weisen die FHT-Frequenz auf. Das erste und zweite Taktsignal F1, F2, haben ein Impulsbreiten-Impulspausen-Verhältnis von 1 : 1, während das dritte und das vierte Taktsignal F3, F4 ein solches von 1 : 7 haben und gegeneinander um 180° phasenverschoben sind. Entsprechende Vorderflanken des ersten, zweiten und fünften Taktsignals F1, F2, F5 fallen zusammen, während die Vorderflanke des vierten Taktsignals F4 diesen Vorderflanken um die Periodendauer T des ersten Taktsignals F1 voreilt. Die entsprechenden Beziehungen für die Frequenzen $f_1 \ldots f_5$ sind der Deutlichkeit halber in Fig. 2 nochmals angegeben.

In Fig. 1 liegt der Ausgang des Parallel-Multiplizierers M1 an den Eingängen des ersten und des zweiten Pufferspeichers PS1, PS2, wobei der Übernahmeeingang des ersten Pufferspeichers PS1 mit dem dritten Taktsignal F3 und der des zweiten Pufferspeichers PS2 mit dem vierten Taktsignal F4 gespeist ist, d. h. in die beiden Pufferspeicher wird das Ausgangs-Binärwort des Parallel-Multiplizierers M1 jeweils um eine halbe Periodendauer der FHT-Frequenz versetzt übernommen. Unter »Übernahmeeingang« ist ein Bedingungs- oder Takteingang zu verstehen, der nur bei entsprechender Aktivierung das Einlesen in den Speicher oder die im folgenden noch zu beschreibenden Stufen freigibt.

Der jeweilige Ausgang des ersten und des zweiten Pufferspeichers PS1, PS2 liegen an den beiden Eingängen des Parallel-Subtrahierers ST1. Entsprechend den mathematischen Bezeichnungen für die Glieder der Differenz a−b (a = Minuend, b = Subtrahent) sind die beiden Eingänge des ersten Parallel-Subtrahierers ST1 mit »Minuend-Eingang« bzw. »Subtrahent-Eingang« bezeichnet. Der Ausgang des ersten Pufferspeichers PS1 liegt somit am Minuend-Eingang und der Ausgang des Pufferspeichers PS2 am Subtrahent-Eingang. Durch die Differenzbildung im ersten Parallel-Subtrahierer ST1 und die entsprechende Übernahmetaktung der beiden Pufferspeicher PS1, PS2 wird die Amplitude der im sogenannten Burst enthaltenen Farbträgerschwingung gemessen.

Am Ausgang des ersten Parallel-Subtrahierers ST1 liegen der Minuend-Eingang des ersten Parallel-Komparators K1 sowie die Eingänge des dritten und des vierten Pufferspeichers PS3, PS4. Der Subtrahent-Eingang des ersten Parallel-Komparators K1 ist mit dem Ausgang des dritten Pufferspeichers PS3 verbunden, an dessen Löscheingang das invertierte Burst-Auftast-Signal $\overline{B}$ liegt, das zusammen mit dem nichtinvertierten Burst-Auftast-Signal B in von mit analoger Signalaufbereitung arbeitenden Farbfernsehempfängern her bekannter Weise gewonnen wird. Es ist ein impulsförmiges Signal, das eine Impulsbreite von etwa 4,5 µs hat und in jeder Zeile des Fernsehbildes dann auftritt, wenn im Chrominanzsignal der Burst auftritt.

Für die Zwecke der vorliegenden Erfindungsbeschreibung werden auch die beiden Eingänge von Parallel-Komparatoren mit Minuend-Eingang und Subtrahent-Eingang bezeichnet, was aufgrund der Überlegung für vertretbar gehalten wird, daß die von Komparatoren vorgenommene Rechenoperation rein formal der einer Differenzbildung nähersteht als der einer Summenbildung mittels eines Addierers, wenn auch die konkrete Innenschaltung von Komparatoren denen von Addierern ähnlicher ist als denen von Subtrahierern, vgl. die entsprechenden mathematischen Operationen a−b, a ≥ b im Gegensatz zu a + b.

Am Minuend-größer-Subtrahent-Ausgang des ersten Parallel-Komparators K1 liegt der Übernahmeeingang des dritten Pufferspeichers PS3, während dem Übernahmeeingang des vierten Pufferspeichers PS4 das fünfte Taktsignal F5 zugeführt ist.

Im dritten Pufferspeicher PS3 wird somit die Maximalamplitude der im Burst enthaltenen Farbträgerschwingung während jeder Zeile festgestellt, da in ihn nur dann Eingangsinformation übernommen wird, wenn mittels des ersten Parallel-Komparators K1 festgestellt wird, daß sein Eingangssignal größer als sein Ausgangssignal ist. Somit bleibt schließlich die aufgetretene Maximalamplitude der Farbträgerschwingung darin in digitaler Form gespeichert.

Der Ausgang des dritten Pufferspeichers PS3 und der des vierten Pufferspeichers PS4 sind mit dem ersten bzw. zweiten Eingang des Parallel-Addierers AD verbunden. Sein Ausgangssignal ist somit die Summe aus dem üblicherweise mit Rauschen behafteten Ausgangssignal des vierten Pufferspeichers PS4 und dem von Rauschen befreiten Ausgangssignal des dritten Pufferspeichers PS3. Bezeichnet man zur Veranschaulichung dieses Effekts das rauschbefreite Burstsignal mit BA und den Rauschanteil mit N so ist am Ausgang des Parallel-Addierers AD ein Summensignal von 2BA + N zu entnehmen, d. h. die Wirkung des Rauschanteils ist um den Faktor 2 vermindert. Eine weitere Reduzierung um einen Faktor 2 ist dadurch möglich, daß das Ausgangssignal des dritten Pufferspeichers PS3 dem ersten Eingang des Parallel-Addierers AD um ein Bit verschoben zugeführt wird, d. h. daß das höchstwertige Ausgangsbit des dritten Pufferspeichers PS3 dem dem höchstwertigen Eingangsbit nächstniedrigen Bit des Parallel-Addierers zugeführt wird.

Der Ausgang des Parallel-Addierers AD liegt am jeweiligen Minuend-Eingang des zweiten und des dritten Parallel-Komparators K2, K3, während am jeweiligen Subtrahent-Eingang der Ausgang des ersten bzw. des zweiten programmierbaren Festwertspeichers FS1, FS2 liegt. In diesen beiden Festwertspeichern ist ein oberer bzw. ein unterer Referenzwert gespeichert, der die Amplitudenregelung bestimmt. Diese Referenzwerte können vom Hersteller des Farbfernsehempfängers nach dem von ihm zu bestimmenden Erfordernissen eingespeichert werden.

Mittels des zweiten und dritten Parallel-Komparators K2, K3 wird festgestellt, ob das Ausgangssignal des Parallel-Addierers AD zwischen den beiden Referenzwerten liegt, liegt es außerhalb dieser beiden Referenzwerte, ist es also entweder zu klein oder zu groß, so werden entsprechende Signale dem ersten Vorwärts-Rückwärts-Zähler Z1 zugeführt, die ihn in Vorwärts- oder Rückwärts-Richtung zählen lassen. Hierzu ist der Minuend-größer-Subtrahent-Ausgang des zweiten Parallel-Komparators K2 am Bedingungseingang für Vorwärtszählen und der Minuend-kleiner-Subtrahent-Ausgang des dritten Parallel-Komparators K3 am Bedingungseingang für Rückwärtszählen des ersten Vorwärts-Rückwärts-Zählers Z1 angeschlossen. Seinem Zähleingang sind horizontalfrequente Impulse H zugeführt, die beispielsweise aus den Horizontal-Synchronimpulsen abgeleitet werden können. Durch entsprechende logische Verknüpfung der beiden erwähnten Bedingungseingänge mit dem Nullzustand des ersten Vorwärts-Rückwärts-Zählers Z1 sind bei ihm ein Vorwärts-Nulldurchgangs-Ausgang und ein Rückwärts-Nulldurchgangs-Ausgang vorgesehen, d. h. es wird unterschieden, ob der Nulldurchgang bei Vorwärtszählen oder bei Rückwärtszählen durchlaufen wird.

Der Vorwärts-Nulldurchgangs-Ausgang ist mit dem Vorwärts-Zähleingang und der Rückwärts-Nulldurchgangs-Ausgang mit dem Rückwärts-Zähleingang des zweiten · Vorwärts-Rückwärts-Zählers Z2 verbunden, d. h. damit werden die entsprechenden Nulldurchgänge jn Rückwärts- bzw. Vorwärtsrichtung gezählt. Die Zähler-Ausgänge des zweiten Vorwärts-Rückwärts-Zählers Z2 liegen an den ersten Eingängen des zweiten Parallel-Multiplizierers M2 und des elektronischen Vielfachumschalters US, d. h. das durch den Zählerstand des zweiten Vorwärts-Rückwärts-Zählers Z2 bestimmte Binärwort ist das Eingangssignal für die Stufen M2 und US.

Der erste Vorwärts-Rückwärts-Zähler Z1 hat die Funktion eines Zeitkonstantenglieds, wobei die Zeitkonstante durch seine Zählkapazität gegeben ist. In einer realisierten Schaltung, in der die erwähnten Parallelverbindungsleitungen im allgemeinen für acht Bit ausgelegt sind, hatte der Vorwärts-Rückwärts-Zähler Z1 eine Zählkapazität $2^{11}$.

Das erwähnte Ausgangssignal des zweiten Vorwärts-Rückwärts-Zählers Z2 ist bereits das Amplitudenregelsignal, das dem zweiten Eingang des ersten Parallel-Multiplizierers M1 zuzuführen ist. Hierzu ist der elektronische Vielfachumschalter US vorgesehen, dessen Ausgang am zweiten Eingang des ersten Parallel-Multiplizierers M1 liegt. Wenn das digitale Chrominanzsignal C wie in dem ausgeführten Beispiel mit acht Bit dem ersten Parallel-Multiplizierer M1 zugeführt wird, so sind beim Amplitudenregelsignal ein Bit weniger, also sieben Bit erforderlich, d. h. die Zählkapazität des zweiten Vorwärts-Rückwärts-Zählers Z2 beträgt $2^7$.

Am zweiten Eingang des zweiten Parallel-Multiplizierers M2 liegt der Ausgang des fünften Pufferspeichers PS5, dessen Eingang das Farbsättigungs-Einstellsignal SE in digitaler Form zugeführt ist und an dessen Übernahmeeingang das Burst-Auftast-Signal B liegt. Der Ausgang des zweiten Parallel-Multiplizierers M2 liegt am zweiten Eingang des Vielfachumschalters US, an dessen Steuereingang ebenfalls das Burst-Auftast-Signal B liegt. Dadurch wird während des Burst-Auftast-Impulses das Ausgangssignal des zweiten Vorwärts-Rückwärts-Zählers Z2 zum ersten Parallel-Multiplizierer M1 durchgeschaltet und somit die Burst-Amplitude geregelt, dagegen wird während der übrigen Zeilendauer das Ausgangssignal des zweiten Vorwärts-Rückwärts-Zählers Z2, multipliziert mit dem Farbsättigungs-Einstellsignal SE, am ersten Parallel-Multiplizierer M1 angelegt.

Wenn das zweite Taktsignal F2 mit der FHT-Frequenz nicht in Phase mit der empfangenen Farbträgerschwingung, also den Burst-Schwingungen, ist, so ist das Ausgangssignal des ersten Parallel-Subtrahierers ST1 negativ, was im übrigen auch dann auftritt, wenn kein Burstsginal vorhanden ist. Das Negativsein wird dadurch festgestellt, daß der Minuend-gleich-Subtrahent-Ausgang und der Minuend-kleiner-Subtrahent-Ausgang des ersten Parallel-Subtrahierers ST1 mittels des ODER-Gliedes OD verknüpft sind, dessen Ausgangssignal, über den Inverter IV invertiert, dem ersten Eingang des ersten UND-Glieds U1 und direkt dem ersten Eingang des zweiten UND-Glieds U2 zugeführt sind, an deren zweiten Eingängen das vierte Taktsignal F4 liegt.

Der Ausgang des ersten UND-Glieds U1 liegt am Vorwärts-Zähleingang und der Ausgang des zweiten UND-Glieds U2 am Rückwärts-Zähleingang des dritten Vorwärts-Rückwärts-Zählers Z3, der wiederum die Funktion der Bereitstellung einer Zeitkonstante hat. Sein Vorwärts-Nulldurchgangs-Ausgang liegt am R-Einrang des ersten RS-Flipflops FF1 und sein Rückwärts-Nulldurchgangs-Ausgang an dessen S-Eingang. Bei richtiger Phasenlage zwischen dem zweiten Taktsignal F2 und der Burst-Schwingung ergibt sich am Vorwärts-Nulldurchgangs-Ausgang ein Impuls, der das erste RS-Flipflop FF1 zurücksetzt und somit bei der im Ausführungsbeispiel vorausgesetzten positiven Logik an seinem Q-Ausgang den einem niedrigen Potential zugeordneten Binärwert L erzeugt. Das eben erwähnte Signal für die richtige Phasenlage zwischen zweitem Taktsignal F2 und Burst-Schwingung ist somit auch das PAL-Identifikationssignal. Bei Nichtsynchronismus tritt dagegen am Rückwärts-Nulldurchgangs-Ausgang des dritten Vorwärts-Rückwärts-Zählers Z3 ein Impuls auf, der das erste RS-Flipflop FF1. in entgegengesetzter Richtuna aktiviert und somit am Q-Ausgang ein dem positiven Binärwert zugeordnetes Signal H erzeugt, das zur Farbunterdrückung ausgenutzt wird. Dazu ist das Vielfach-UND-Glied VU vorgesehen, dem einerseits einige der höchstwertigen Bits des Ausgangssignals des ersten Parallel-Multiplizierers M1 zugeführt sind. Im erwähnten ausgeführten Beispiel waren das fünf Bit. Jedes dieser Bits ist mittels des Vielfach-UND-Glieds VU mit dem Q-Ausgang des ersten RS-Flipflops FF1 UND-verknüpft und ebenso mit dem Ausgang des NAND-Glieds NG, dessen Eingänge mit einigen höchstwertigen Bits des Ausgangssignals des zweiten Vorwärts-Rückwärts-Zählers Z2 verbunden sind, im Ausführungsbeispiel der Fig. 1 also mit den drei höchstwertigen Bits dieses Ausgangssignals. Durch Auswertung dieser drei höchstwertigen Bits wird erreicht, daß bei großer Amplitude des Amplitudenregelsignals, die somit einem sehr kleinen Chrominanzsignal C entspricht, die Farbunterdrückung ebenfalls ausgelöst wird.

Mit den nun noch zu erläuternden Teilschaltungen des Ausführungsbeispiels der Fig. 1 ist eine weitere Farbunterdrückung in Abhängigkeit vom Rauschanteil des Chrominanzsignals möglich. Hierzu dient zunächst der zweite Parallel-Subtrahierer ST2, dessen Minuend-Eingang am Ausgang des dritten Pufferspeichers PS3 und dessen Subtrahent-Eingang am Ausgang des vierten Pufferspeichers PS4 liegt. In seinem Ausgangssignal tritt somit nur noch der oben erwähnte Rauschanteil N auf.

Am Ausgang des zweiten Parallel-Subtrahierers ST2 liegen die Minuend-Eingänge des vierten und des fünften Parallel-Komparators K4, K5, an deren jeweiligem Subtrahent-Eingang der Ausgang des dritten bzw. des vierten programmierbaren Festwertspeichers FS3, FS4 liegt. In diesen Festwertspeichern ist ein unterer bzw. ein oberer Referenzwert gespeichert, der die Farbabschaltung bei verrauschten Eingangssignalen bestimmt und vom Hersteller des Farbfernsehempfängers einprogrammiert werden kann. Diese beiden Referenzwerte können als Referenzwert für Farbunterdrückung bzw. für Nicht-Farbunterdrückung betrachtet werden.

Der Minuend-kleiner-Subtrahent-Ausgang des vierten Parallel-Komparators K4 liegt am Bedingungseingang für Vorwärtszählen und der Minuend-größer-Subtrahent-Ausgang des fünften Parallel-Komparators K5 am Bedingungseingang für Rückwärtszählen des vierten Vorwärts-Rückwärts-Zählers Z4, dessen Zähleingang horizontalfrequente Impuls H zugeführt sind. Sein Vorwärts-Nulldurchgangs-Ausgang liegt am R-Eingang und sein Rückwärts-Nulldurchgangs-Ausgang am S-Eingang des zweiten RS-Flipflops FF2, dessen $\bar{Q}$-Ausgang mit einem weiteren Eingang des Vielfach-UND-Glieds VU verbunden ist, so daß bei zu starkem Rauschen ebenfalls eine Farbunterdrückungswirkung erreicht wird.

Am Ausgang des Vielfach-UND-Glieds VU steht das geregelte Chrominanzsignal CG in digitaler Form als Parallel-Binärwort zur Verfügung.

Durch den Pfeil am Rückwärts-Nulldurchgangs-Ausgang des dritten Vorwärts-Rückwärts-Zählers Z3 soll angedeutet sein, daß mittels eines damit über ein weiteres ODER-Glied getakteten D-Flipflop, wobei dem ODER-Glied noch die invertierten Burst-Auftast-Impulse zugeführt sind, die richtige Phasenlage des den PAL-Umschalter steuernden Signals mit halber Zeilenfrequenz erzeugt werden kann.

**Patentansprüche**

1. Farbfernsehempfänger mit mindestens einer digitalen integrierten Schaltung zur Verarbeitung des Farb-Bild-Austast-Synchronsignal-Gemisches (FBAS-Signals),

— mit einem Rechtecksignal-Taktgenerator für mindestens vier Taktsignale (F1, F2, F3, F4) als Farbhilfsträger-Quarzoszillator (FHT-Oszillator), deren erstes (F1) die vierfache FHT-Frequenz und deren zweites bis viertes (F2, F3, F4) die FHT-Frequenz haben, wobei das erste und zweite Taktsignal (F1, F2) ein Impulsbreiten-Impulspausen-Verhältnis von 1 : 1 haben,

— mit einer das digitale Chrominanzsignal (C) liefernden Stufe,

— mit einem ersten Parallel-Multiplizierer (M1), dessen eines Eingangssignal das digitale Chrominanzsignal (C) und dessen anderes Eingangssignal ein digitales Farbsättigungs-Einstellsignal (SE) ist,

— mit mindestens einem Pufferspeicher, dem das digitale Chrominanzsignal (C) und das dritte farbhilfsträgerfrequente Taktsignal (F3) zugeführt sind, und

— mit binären Rechenstufen, wie Parallel-Addierern und Parallel-Subtrahierern,

gekennzeichnet durch folgende der digitalen Amplitudenregelung der empfangenen Farbträgerschwingungen, der digitalen PAL-Identifizierung und Farbunterdrückung sowie der digitalen Farbsättigungseinstellung dienende Teilschaltungen und Merkmale:

— der FHT-Oszillator erzeugt ein fünftes Taktsignal (F5) mit der doppelten FHT-Frequenz und mit einem Impulsbreiten-Impulspausen-Verhältnis von 1 : 3,

— das dritte und das vierte Taktsignal (F3, F4) haben ein Impulsbreiten-Impulspausen-Verhältnis von 1 : 7 und sind gegeneinander um 180° phasenverschoben,

— die Vorderflanken des ersten, zweiten und fünften Taktsignals (F1, F2, F5) fallen zusammen, während die Vorderflanke des vierten Taktsignals (F4) diesen Vorderflanken um die Periodendauer (T) des ersten Taktsignals (F1) nacheilt,

— der Ausgang des ersten Parallel-Multiplizierers (M1) liegt an den Eingängen eines ersten und eines zweiten Pufferspeichers (PS1, PS2), an deren jeweiligem Übernahmeeingang das dritte (F3) bzw. das vierte Taktsignal (F4) liegt,

— am Minuend-Eingang eines ersten Parallel-Subtrahierers (ST1) liegt der Ausgang des ersten Pufferspeichers (PS1) und an seinem Subtrahent-Eingang der Ausgang des zweiten Pufferspeichers (PS2),

— am Ausgang des ersten Parallel-Subtrahierers (ST1) liegen der Minuend-Eingang eines ersten Parallel-Komparators (K1) sowie die Eingänge eines dritten und eines vierten Pufferspeichers (PS3, PS4) an dessen Übernahmeeingang das fünfte Taktsignal (F5) liegt,

— am Subtrahent-Eingang des ersten Parallel-Komparators (K1) liegt der Ausgang des dritten Pufferspeichers (PS3) und an seinem Minuend-größer-Subtrahent-Ausgang der Übernahmeeingang des dritten Pufferspeichers (PS3), an dessen Löscheingang das invertierte Burst-Auftast-Signal ($\bar{B}$) liegt,

— am ersten Eingang eines Parallel-Addierers (AD) liegt der Ausgang des ersten Parallel- Komparators (K1) und an seinem zweiten Eingang der Ausgang des vierten Pufferspeichers (PS4),

— die Minuend-Eingänge eines zweiten und eines dritten Parallelkomparators (K2, K3) liegen am Ausgang des Paralleladdierers (AD), während am Subtrahent-Eingang des zweiten Parallelkomparators (K2) der Ausgang eines ersten programmierbaren Festwertspeichers (FS1) und am Subtrahent-Eingang des dritten Parallel-Komparators (K3) der Ausgang eines zweiten programmierbaren Festwertspeichers (FS2) liegt, wobei im ersten bzw. zweiten programmierbaren Festwertspeicher (FS1, FS2) ein oberer bzw. ein unterer, die Amplitudenregelung bestimmender Referenzwert gespeichert ist,

— der Minuend-größer-Subtrahent-Ausgang des zweiten Parallel-Komparators (K2) liegt am Bedingungseingang für Vorwärtszählen und der Minuend-kleiner-Subtrahent-Ausgang des dritten Parallel-Komparators (K3) am Bedingungseingang für Rückwärtszählen eines ersten Vorwärts-Rückwärts-Zählers (Z1), dessen Zähleingang horizontalfrequenzte Impulse (H) zugeführt sind, während der Vorwärts-Nulldurchgangs-Ausgang am Vorwärts-Zähleingang und dessen Rückwärts-Nulldurchgangs-Ausgang am Rückwärts-Zähleingang eines zweiten Vorwärts-Rückwärts-Zählers (Z2) liegt,

— die Zählerstand-Ausgänge des zweiten Vorwärts-Rückwärts-Zählers (Z2) liegen an den ersten Eingängen eines zweiten Parallel-Multiplizierers (M2) und eines elektronischen Vielfachumschalters (US), dessen zweiter Eingang am Ausgang des zweiten Parallel-Multiplizierers (M2) und an dessen Steuereingang das Burst-Auftast-Signal (B) liegt,

— am Eingang eines fünften Pufferspeichers (PS5) liegt das digitale Farbsättigungs-Einstellsignal (SE) und an seinem Übernahmeeingang das Burst-Auftast-Signal (B),

— am zweiten Eingang des zweiten Parallel-Multiplizierers (M2) liegt der Ausgang des fünften Pufferspeichers (PS5),

— der Ausgang des Vielfachumschalters (US) liegt am zweiten Eingang des ersten Multiplizierers (M1), dessen Übernahmeeingang das erste Taktsignal (F1) zugeführt ist,

— der Minuend-gleich-Subtrahent-Ausgang und der Minuend-kleiner-Subtrahent-Ausgang des ersten Parallel-Subtrahierers (ST1) liegt an den Eingängen eines ODER-Glieds (OD), dessen Ausgang über einen Inverter (IV) am ersten Eingang eines ersten UND-Glieds (U1) und direkt am ersten Eingang eines zweiten UND-Glieds (U2) liegt, an deren zweiten Eingängen das vierte Taktsignal (F4) liegt,

— der Ausgang des ersten UND-Glieds (U1) liegt am Vorwärts-Zähleingang und der Ausgang des zweiten UND-Glieds (U2) am Rückwärts-Zähleingang eines dritten Vorwärts-Rückwärts-Zählers (Z3), dessen Vorwärts-Nulldurchgangs-Ausgang am R-Eingang und dessen Rückwärts-Nulldurchgangs-Ausgang am S-Eingang eines ersten RS-Flipflops (FF1) liegt,

— einige, vorzugsweise drei, höchstwertige Bits des Ausgangssignals des zweiten Vorwärts-Rückwärts-Zählers (Z2) liegen an den Eingängen eines NAND-Glieds (NG), und

— einige, vorzugsweise fünf, höchstwertige Bits des Ausgangssignals des ersten Parallel-Multiplizierers (M1) liegen an den Eingängen eines Vielfach-UND-Glieds (VU), an dessen weiteren Eingängen der Ausgang des NAND-Glieds (NG) und der Q-Ausgang des ersten RS-Flipflops (FF1) liegen und an dessen Ausgang das geregelte digitale Chrominanzsignal (CG) abzunehmen ist.

2. Farbfernsehempfänger nach Anspruch 1, gekennzeichnet durch folgende Merkmale:

— der Minuend-Eingang eines zweiten Parallel-Subtrahierers (ST2) liegt am Ausgang des dritten Pufferspeichers (PS3) und sein Subtrahent-Eingang am Ausgang des vierten Pufferspeichers (PS4),

— die Minuend-Eingänge eines vierten und eines fünften Parallelkomparators (K4, K5) liegen am Ausgang des zweiten Parallel-Subtrahierers (ST2), während am Subtrahent-Eingang des vierten Parallel-Komparators (K4) der Ausgang eines dritten programmierbaren Festwertspeichers (FS3) und am Subtrahent-Eingang des fünften Parallelkomparators (K5) der Ausgang eines vierten programmierbaren Festwertspeichers (FS4) liegt, wobei im dritten bzw. im vierten programmierbaren Festwertspeicher (FS3, FS4) ein unterer bzw. ein oberer, die Farbabschaltung bei verrauschten Eingangssignalen bestimmender Referenzwert gespeichert ist,

— der Minuend-kleiner-Subtrahent-Ausgang des vierten Parallel-Komparators (K4) liegt am Bedingungseingang für Vorwärtszählen und der Minuend-größer-Subtrahent-Ausgang des fünften Parallel-Komparators (K5) am Bedingungseingang für Rückwärtszählen eines vierten Vorwärts-Rückwärts-Zählers (Z4), dessen Zähleingang horizontalfrequente Impulse (H) zugeführt sind, und

— der Vorwärts-Nulldurchgangs-Ausgang des vierten Vorwärts-Rückwärts-Zählers (Z4) liegt am R-Eingang und sein Rückwärts-Nulldurchgangs-Ausgang am S-Eingang eines zweiten RS-Flipflops (FF2), dessen $\bar{Q}$-Ausgang mit einem weiteren Eingang des Vielfach-UND-Glieds (VU) verbunden ist.

**Claims**

1. Television receiver comprising at least one digital integrated circuit for processing the composite color signal,

— with a square-wave clock generator used as a chrominance-subcarrier oscillator and generating at least four clock signals (F1, F2, F3, F4) the first of which (F1) has four times the chrominance-subcarrier frequency, and the second to fourth of which (F2, F3, F4) have the chrominance-subcarrier frequency, the first and second clock signals (F1, F2) having a mark/space ratio of 1 : 1,

— with a stage providing the digital chrominance signal (C),

— with a first parallel multiplier (M1) one input signal of which is the digital chrominance signal (C), and the other input signal of which is a digital chroma control signal (SE),

— with at least one buffer memory to which the digital chrominance signal (C) and the third clock signal (F3) are fed, and

— with binary computing stages, such as parallel adders and parallel subtracters,

characterized by the following subcircuits and features serving to effect digital amplitude control of the received chrominance-subcarrier wave, digital PAL identification and color killer action as well as digital chroma control:

— the chrominance-subcarrier oscillator generates a fifth clock signal (F5) having twice the chrominance-subcarrier frequency and a mark/space ratio of 1 : 3;

— the third and fourth clock signals (F3, F4) have a mark/space ratio of 1 : 7 and are 180° out of phase with respect to each other;

— leading edges of the first, second, and fifth clock signals (F1, F2, F5), coincide, while the leading edges of the fourth clock signal (F4) lead those leading edges by the period (T) of the first clock signal (F1);

— the output of the first parallel multiplier (M1) is connected to the inputs of a first buffer memory (PS1) and a second buffer memory (PS2) whose enable inputs are fed with the third clock signal (F3), and the fourth clock signal (F4), respectively;

— the minuend input of a first parallel subtracter (ST1) is connected to the output of the first buffer memory (PS1), and the subtrahend input of the first parallel subtracter (ST1) is connected to the output of the second buffer memory (PS2);

— the output of the first parallel subtracter (ST1) is connected to the minuend input of a first parallel comparator (K1) and to the inputs of a third buffer memory (PS3) and a fourth buffer memory (PS4), whose enable input is fed with the fifth clock signal (F5);

— the subtrahend input of the first parallel comparator (K1) is connected to the output of the third buffer memory (PS3), and the minuend-greater-thansubtrahend output of the first parallel comparator (K1) is connected to the enable input of the third buffer memory (PS3), whose clear input is fed with the inverted burst gating signal (B̄);

— the first input of a parallel adder (AD) is connected to the output of the third buffer memory (PS3) and the second input of the parallel adder (AD) is connected to the output of the fourth buffer memory (PS4);

— the minuend inputs of a second parallel comparator (K2) and a third parallel comparator (K3) are connected to the output of the parallel adder (AD), while the subtrahend input of the second parallel comparator (K2) is connected to the output of a first programmable read-only memory (FS1), and the subtrahend input of the third parallel comparator (K3) is connected to the output of a second programmable read-only memory (FS2), the first and second programmable read-only memories (FS1, FS2) holding an upper reference value and a lower reference value, respectively, which determine the amplitude control;

— the minuend-greater-than-subtrahend output of the second parallel comparator (K2) is connected to the count-up enable input of a first up-down counter (Z1), and the minuend-smaller-than-subtrahend output of the third parallel comparator (K3) is connectred to the count-down enable input of the first up-down counter (Z1), whose count input is fed with horizontalfrequency pulses (H), while the »up« zero-crossing output and the »down« zero-crossing output of the first up-down counter (Z1) are connected, respectively, to the up input and the down input of a second up-down counter (Z2);

— the outputs of the second up-down counter (Z2) are connected to the first inputs of a second parallel multiplier (M2) and an electronic multiple switch (US) having its second input connected to the output of the second parallel multiplier (M2), while its control input is fed with the burst gating signal (B);

— the digital chroma control signal (SE) is applied to the input of a fifth buffer memory (PS5), whose enable input is fed with the burst gating signal (B);

— the second input of the second parallel multiplier (M2) is connected to the output of the fifth buffer memory (PS5);

— the output of the multiple switch (US) is connected to the second input of the first multiplier (M1), whose enable input is fed with the first clock signal (F1);

— the minuend-equal-to-subtrahend output and the minuend-smaller-than-subtrahend output of the first parallel subtracter (ST1) are connected to the inputs of an OR gate (OD), whose output is connected via an inverter (IV) to the first input of a first AND gate (U1) and directly to the first input of a second AND gate (U2), the second inputs of which AND gates (U1, U2) are fed with the fourth clock signal (F4);

— the outputs of the first AND gate (U1) and the second AND gate (U2) are connected, respectively, to the up input and the down input of a third up-down counter (Z3), whose »up« and »down« zero-crossing outputs are connected, respectively, to the R input and the S input of a first RS flip-flop (FF1);

— a few, preferably three, most significant bits of the output signal of the second up-down counter (Z2) are applied to the inputs of a NAND gate (NG), and

— a few, preferably five, most significant bits of the output signal of the first parallel multiplier (M1) are applied to the inputs of a multiple-input AND gate (VU), whose other inputs are connected to the output of the NAND gate (NG) and to the Q output of the first RS flip-flop (FF1), and whose output provides the controlled digital chrominance signal (CG).

2. A color-television receiver as claimed in claim 1, characterized by the following features:

— the minuend input of a second parallel subtracter (ST2) is connected to the output of the third buffer memory (PS3), and the subtrahend input of the second parallel subtracter (ST2) is connected to the output of the fourth buffer memory (PS4);

— the minuend inputs of a fourth parallel comparator (K4) and a fifth parallel comparator (K5) are connected to the output of the second parallel subtracter (ST2), while the subtrahend inputs of the fourth parallel comparator (K4) and the fifth parallel comparator (K5) are connected to the output of a third programmable read-only memory (FS3) and to the output of a fourth programmable read-only memory (FS4), respectively, the third and fourth programmable read-only memories (FS3, FS4) holding a lower reference value and an upper reference value, respectively, which determine color killer action in the presence of noisy input signals;

— the minuend-smaller-than-subtrahend output of the fourth parallel comparator (K4) is connected to the count-up enable input of a fourth up-down counter (Z4), and the minuend-greater-than-subtrahend output of the fifth parallel comparator (K5) is connected to the count-down enable input of the fourth up-down counter (Z4), whose count input is fed with horizontal-frequency pulses (H), and

— the »up« zero-crossing output of the fourth up-down counter (Z4) is connected to the R input of a second RS flip-flop (FF2), and the »down« zero-crossing output of the fourth up-down counter (Z4) is connected to the S input of the second RS flip-flop (FF2), whose Q̄ output is coupled to a further input of the multiple-input AND gate (VU).

**Revendications**

1. Récepteur de télévision en couleurs, ayant au moins un circuit intégré numérique pour le traitement du signal composite »chrominance-luminance-suppression-synchronisation« (signal FBAS) comportant:

— un générateur de signaux d'horloge rectangulaires, pour engendrer au moins quatre signaux d'horloge (F1, F2, F3, F4), opérant en tant qu'oscillateur à quartz de sous-porteuse de chrominance (oscillateur FHT), le premier (F1) de ces signaux ayant une fréquence quadruple de celle de la sous-porteuse de chrominance (FHT) et le deuxième, le troisième et le quatrième de ces signaux (F2, F3, F4) ayant la frequence de la sous-porteuse de chrominance (FHT), les premier et deuxième signaux d'horloge (F1, F2) ayant un rapport largeur-intervalle d'impulsion de 1/1;

— un étage fournissant le signal numérique de chrominance (C);

— un premier multiplicateur parallèle (M1) dont le premier signal d'entrée est le signal numérique de chrominance (C) et dont l'autre signal d'entrée est un signal numérique de réglage de saturation de couleur (SE);

— au moins une mémoire-tampon à laquelle sont amenés le signal numérique de chrominance (C) et le troisième signal d'horloge (F3) à fréquence de sous-porteuse de chrominance; et

— des étages de calcul binaires tels que des additionneurs parallèles et des soustracteurs parallèles;

caractérisé par les dispositions et éléments de circuits suivants qui servent à la régulation numérique d'amplitude des oscillations de sous-porteuse de couleur reçues, à l'identification PAL numérique, et à la suppression de couleur, ainsi qu'au réglage numérique de la saturation de couleur;

— l'oscillateur FHT produit un cinquième signal d'horloge (F5) ayant une fréquence double de celle de la FHT et un rapport largeur-intervalle d'impulsion de 1 : 3;

— les troisième et quatrième signaux d'horloge (F3, F4) ont un rapport largeur-intervalle d'impulsion de 1 : 7 et sont mutuellement déphasés de 180°;

— les flancs avant des premier, deuxième et cinquième signaux d'horloge (F1, F2, F5) coïncident, tandis que les flancs avant du quatrième signal d'horloge (F4) sont par rapport à ces flancs avant, en retard de la durée d'une période (T) du premier signal d'horloge (F);

— la sortie du premier multiplicateur parallèle (M1) est connectée aux entrées d'une première et d'une deuxième mémoires tampons (PS1, PS2) aux entrées de transfert desquelles sont respectivement appliqués les troisième (F3) et quatrième (F4) signaux d'horloge;

— l'entrée de terme principal d'un premier soustracteur parallèle (ST1) est connectée à la sortie de la première mémoire tampon (PS1) et son entrée de terme à soustraire est connectée à la sortie de la deuxième mémoire tampon (PS2);

— la sortie du premier soustracteur parallèle (ST1) est connectée à l'entrée du terme principal d'un premier comparateur parallèle (K1) et aux entrées d'une troisième et d'une quatrième mémoires tampons (PS3, PS4) l'entrée de transfert de cette dernière recevant le cinquième signal d'horloge (F5);

— à l'entrée principale du premier comparateur parallèle (K1) est connectée la sortie de la troisième mémoire-tampon (PS3), et la sortie »terme principal plus grand que terme à soustraire« de ce comparateur est appliquée à l'entrée de transfert de la troisième mémoire-tampon (PS3) à l'entrée d'effacement de laquelle est appliqué le signal de sélection de salve inversé ($\overline{B}$);

— à la première entrée d'un additionneur parallèle (AD) est appliquée la sortie du premier comparateur parallèle (K1) et à la deuxième entrée de cet additionneur est appliquée la sortie de la quatrième mémoire tampon (PS4);

— les entrées de terme principal d'un deuxième comparateur parallèle (K2) et d'un troisième (K3) sont connectées à la sortie de l'additionneur parallèle (AD), tandis qu'à l'entrée de terme principal du deuxième comparateur parallèle (K2) est appliquée la sortie d'une première mémoire morte programmable (FS1) et qu'à l'entrée de terme à soustraire du troisième comparateur parallèle (K3) est appliquée la sortie d'une deuxième mémoire morte programmable (FS2), lesdites première et deuxième mémoires mortes programmables (FS1, FS2) contenant respectivement une valeur de référence supérieure et une valeur de référence inférieure déterminant la régulation d'amplitude;

— la sortie »terme principal plus grand que terme à soustraire« du deuxième comparateur parallèle (K2) est appliquée à l'entrée de mise en condition de comptage ascendant d'un premier compteur-décompteur (Z1), et la sortie »terme principal plus petit que le terme à soustraire« du troisième comparateur parallèle (K3) est appliquée à l'entrée de mise en condition de comptage descendant de ce premier compteur-décompteur (Z1) à l'entrée de comptage duquel sont amenées des impulsions (H) ayant la fréquence horizontale, tandis que la sortie »passage par zéro en montant« et la sortie »passage par zéro en descendant« de ce premier compteur sont respectivement appliquées à l'entrée de comptage ascendant et à l'entrée de comptage descendant d'un deuxième compteur-décompteur (Z2);

— les sorties de niveau de comptage du deuxième compteur-décompteur (Z2) sont appliquées aux premières entrées d'un deuxième multiplicateur parallèle (M2) et d'un commutateur électronique (US) dont une deuxième entrée est connectée à la sortie du deuxième multiplicateur parallèle (M2), le signal de sélection de salve (B) étant appliqué à l'entrée de commande de ce commutateur;

— le signal numérique de réglage de saturation de couleur (SE) est appliqué à l'entrée d'une cinquième mémoire tampon (PS5) à l'entrée de transfert de laquelle est appliqué le signal de sélection de salve (B);

— la sortie de la cinquième mémoire tampon (PS5) est connectée à la deuxième entrée du deuxième multiplicateur parallèle (M2);

— la sortie du commutateur (US) est connectée à la deuxième entrée du premier multiplicateur (M1) à l'entrée de transfert duquel est amené le premier signal d'horloge (F1);

— la sortie »terme principal égale terme à soustraire« et la sortie »terme principal plus petit que terme à soustraire« du premier soustracteur parallèle (ST1) sont appliquées aux entrées d'une porte OU (OD) dont la sortie est appliquée, par l'intermédiaire d'un inverseur (IV) à la première entrée d'une première porte ET (U1), et directement à la première entrée d'une deuxième porte ET (U2), les deuxièmes entrées de ces portes recevant le quatrième signal d'horloge (F4);

— la sortie de la première porte ET (U1) est appliquée à l'entrée de comptage ascendant d'un troisième compteur-décompteur (Z3), et la sortie du deuxième élément ET (U2) est appliquée à l'entrée de comptage descendant de ce troisième compteur-décompteur (Z3) dont la sortie »passage par zéro en montant est appliquée à l'entrée R d'une première bascule RS (FF1) dont la sortie »passage par zéro en descendant« est appliquée à l'entrée S de cette bascule RS (FF1);

— quelques-uns, de préférence trois, des bits des poids les plus forts du signal de sortie du deuxième compteur-décompteur (Z2) sont appliqués aux entrées d'une porte ET (NG); et

— quelques-uns, de préférence cinq, des bits des poids les plus forts du signal de sortie du premier multiplicateur parallèle (M1) sont appliqués aux entrées d'une porte ET multiple (VU) aux autres entrées de laquelle sont appliquées la sortie de la porte ET (NG) et la sortie Q de la première bascule RS (FF1), et à la sortie de laquelle le signal de chrominance (CG) numérique et régulé, est disponible.

2. Récepteur de télévision en couleurs selon la revendication 1, caractérisé par les dispositions suivantes:

— un deuxième soustracteur parallèle (ST2) a son entrée de terme principal connectée à la sortie de la troisième mémoire tampon (PS3) et son entrée de terme à soustraire à la sortie de la quatrième mémoire tampon (PS4);

— les entrées de terme principal d'un quatrième et d'un cinquième comparateurs parallèles (K4, K5) sont connectées à la sortie du deuxième soustracteur parallèle (ST2), tandis que la sortie d'une troisième mémoire morte programmable (FS3) est connectée à l'entrée de terme à soustraire du quatrième comparateur parallèle (K4), et que la sortie d'une quatrième mémoire morte programmable (FS4) est appliquée à l'entrée de terme à soustraire du cinquième comparateur parallèle (K5), lesdites troisième et quatrième mémoires mortes programmable (FS3, FS4) contenant respectivement une valeur de référence inférieure et une valeur de référence supérieure, déterminant la suppression de la couleur si les signaux d'entrée sont chargés de bruit;

— la sortie »terme principal plus petit que terme à soustraire« du quatrième comparateur parallèle (K4) est connectée à l'entrée de mise en condition de comptage ascendant d'un quatrième compteur-décompteur (Z4), et la sortie »terme principal plus grand que terme à soustraire« du cinquième comparateur parallèle (K5) est reliée à l'entrée de mise en condition de comptage descendant de ce quatrième compteur-décompteur (Z4) à l'entrée de comptage d'impulsions duquel sont amenées des impulsions (H) à fréquence horizontale; et

— la sortie »passage par zéro en montant« du quatrième compteur-décompteur (Z4) est appliquée à l'entrée R d'une deuxième bascule RS (FF2), et la sortie »passage par zéro en descendant« de ce quatrième compteur-décompteur est appliquée à l'entrée S de cette deuxième bascule RS (FF2) dont la sortie $\overline{Q}$ est reliée à une autre entrée de la porte ET multiple (VU).

Fig. 1

Fig.2